# EUROPEAN PATENT APPLICATION

(11) **EP 2 648 060 A1**
(43) Date of publication of application: **09.10.2013**
(21) Application number: 12163079.2
(22) Date of filing: 04.04.2012
(51) Int. Cl.: G05B 19/418

(54) **A method for tracking a batch of material in a process for production of raw or semi-processed material**

(71) Applicant: ABB Research Ltd., 8050 Zürich (CH)
(72) Inventor: Mikkelsen, Christine, 725 91 Västerås (SE); Jakobsson, David, 931 46 Skellefteå (SE); Dong, Diamond, 722 10 Västerås (SE); Lundeholm, Filip, 415 01 Göteborg (SE)
(74) Representative: Savela, Reino Aleksi

(57) **Abstract**

A method for tracking a batch of material through at least one stage in a process (32) in an installation for production of raw or semi-processed material using a process control system (20). Measurement data of physical parameters is recorded for each batch of material. On receipt of a user input via a workstation of the process control system (20) making a selection of one production stage (S10) for one batch of a plurality of batches, the measurement data is then filtered to extract measurement data for the one batch at the one selected stage and for at least one stage (C1, C2, C5; S1-S9, S11-S24; A1-A12, An-1-An-6) prior to the selected stage (S10, S27). The data for the selected batch and data for all prior stages leading up to it is displayed using a visualisation (8, 8') on a graphic user interface of the workstation (18, 19) of the process control system.

## Description

### TECHNICAL FIELD

The present invention is concerned with visualising process control data in a process control system. More particularly the present invention relates to a method and computer program product for tracking a batch of material in a process for production of raw or semi-processed material and providing an improved graphical user interface for an operator in a process control system as well as to an operator workstation connected to the process control system.

### TECHNICAL BACKGROUND

Computer based process control systems are widely used in a number of different industrial environments. Process control systems are used in parts of a process installation such as a mine, or quarry, or cement plant in which processing of a solid raw or semi-processed material such as an ore of iron, aluminum, copper, zinc and the like; or for a non-metallic minerals such as coal, clay, grain and so on. In such process installations substances are typically handled in large volumes and processed or treated in a continuous or semi-continuous process. Typically these processes may include an activity such as: collecting raw material by excavation, cutting, blasting or drilling and transporting it to a subsequent stage; mechanically processing material by crushing or grinding, screening or size grading; and/or processing a material to change concentration by agglomeration, blending, pelletisation or other concentration processes.

Process control systems in such processing installations gather and contain information about plant equipment, measurement data of one or more physical properties, process data, current and historic values for the measurement data and the process data, measured variables, trends, and so on which information is used to carry out supervision and control of processes, the production facilities and the industrial plant. The process control information of a process control system is typically presented to the operators by a display screen showing a number of different process graphics that each presents process data (measurements, values), tag identifiers or an equipment ID, alarm status, connections between plant equipment, etc for a given process or process section.

In industries such as mining, mineral extraction and processing, control systems tend to only be installed for supervising and/or controlling selected equipment and processes, or systems which are relatively isolated and separate from other parts of the overall extraction process. In contrast to this, in a factory or in a process in another industry such as in an oil refinery, a paper mill or a steel rolling mill, the location of machinery and equipment is fixed. Thus the position of different process sections is fixed, piping and other connections in the process are fixed, and the provision of process control systems that supervise and control a complete installation with one control system monitoring and controlling a process from beginning to end is well established. Operator displays on workstations or computer terminals in the form of process graphics or other graphical interfaces typically provide displays which cover the whole installation, including each process section in the plant.

A challenge for integrating a process control system in a processing installation for a solid raw or semi-processed material is that it is difficult to create process displays for processes in which the arrangement of equipment and process sections is not static. In a quarry, open pit mine or strip mine new roads, ramps or tunnels may be built, and others may be altered, discontinued with or destroyed. Frequently there is more than one route that may be taken in an above-ground processing installation in order to transfer material from one point, eg a storage area, to another, eg a conveyor or a crushing machine. Similarly in underground mines a mining process is typically dynamic since the mined material from one extraction or production point often does not have a single predefined route between, for example, a first cutting face and an interim storage or other parts of the mine. There may be alternative storages and there are most often alternative ways to transport the mined material to another underground level or up to the surface. Many mines have, for example, two or more hoists, serving one or more underground excavation areas, cutting faces or galleries, some of which may be located at different depths in a mine.

The location of the raw material is known at the start of production activities. In a mining installation for example mining and geological surveys are used to establish the presence and location of ore-bearing formations in the ground. However, the concentration and quality attributes of raw materials like metal ores in different production areas or cutting faces can vary greatly within a single mine or other installation. Also, quality parameters such as moisture content, presence of dust, contaminants and so on may vary from one location in an installation to another, for instance from one storage or stockpile to another. Further, the relative concentration of metal-bearing ore to waste material for each load or batch of raw or semi-processed material taken from the same cutting face may vary between batches. In most raw material production processes batches are transported through a number of stages until a process has reached a stage of completion, such as delivering metal ore to a concentrator line or lime to a kiln. However the individual batches that arrive at an end stage, such as a concentrator, often vary greatly in respect of concentration and quality attributes.

A challenge for providing process control systems in a processing installation for a solid raw or semi-processed material is that trying to create a process view that displays all possible material flows, and/or transportation alternatives, for such a non-static process would result in a cluttered view. It would be difficult to map ongoing activities on a process view display with sufficient information to provide the operator with an effective situation awareness without causing a cluttered or overloaded information display. It is important to avoid undue clutter on a process display or process graphic used in process control. Process graphics are the mainstay of many process control systems. All of the control objects, represented by software objects, are placed in a context of one or more process graphics. The work of an operator supervising a process includes the important functions of supervising the various parts of a process, and taking control actions when necessary.

The main functions used by the operators are typically alarm management, trends, process graphics and faceplates. The majority of these functions are implemented by manipulating control objects in the process graphics. An important functionality in the control system is navigation and another important aspect of that is visualization of system status and to highlight data that has provoked an abnormal condition. However in some situations the operator often has limited time available to make a decision. For a least this reason, it is important to avoid cluttered process displays in order that an operator is provided with information relative to a monitoring and control task. It is also important to avoid clutter so as to reduce operator workload and fatigue.

The inventors have identified that there is a need for a way to visualize batch tracking and process flow in a production process in which a raw or semi-processed material is handled. It would be an advantage to display such a visualization on an operator workstation, included for example in a process graphic, to show the flow of material and progress of a batch through a process in an uncluttered way. Further, it would be desirable for an operator or a process engineer to be able to monitor and/or control concentration attributes of the raw material using a process control system.

### SUMMARY OF THE INVENTION

According to a first aspect of the present invention an improvement is provided in the form of a method for tracking a batch of material through at least one stage in a process in an installation for production of raw or semi-processed material using a process control system, wherein measurement data of physical parameters is sensed and recorded for each batch of material during each stage of the production, wherein each batch of material is moved from a first stage to a second or other stage, the method further comprising on receiving as a data input to a workstation of the process control system a selection of one production stage for one batch of a plurality of batches as a request for information about the selected batch, by filtering the measurement data to extract measurement data for the one batch at the one selected stage and for at least one stage prior to the selected stage, and by displaying information based on the extracted measurement data for the one batch at the one selected stage as a visualisation on a graphic user interface of the workstation of the process control system. The visualization provides an overview of a selected batch of material at a selected stage in the process with the minimum of information. The overview is uncluttered, the visual representation is simple and straightforward for an operator to examine, thus reducing operator the amount of effort required from an operator to supervise a process.

According to an embodiment of the invention a method is disclosed for tracking a batch of material through at least one stage in a process using a process control system, wherein measurement data of physical parameters is sensed and recorded for each batch of material and wherein each batch of material is moved from a first stage to a second or other stage, the method further comprising on receiving a data input to select one production stage for one batch of a plurality of batches as a request for information about the selected batch, and by displaying information based on the extracted measurement data for the one batch at the one selected stage as a visualization, further comprising displaying a route taken by the one batch at the selected stage visually indicated by means of a line joining the at least one prior stage to the selected stage.

According to a preferred embodiment of the invention a method is disclosed for tracking a batch of material through at least one stage in a process using a process control system, wherein measurement data of physical parameters is sensed and recorded for each batch of material and wherein each batch of material is moved from a first stage to a second or other stage, the method further comprising on receiving a data input to select one production stage for one batch of a plurality of batches as a request for information about the selected batch, and by displaying information based on the extracted measurement data for the one batch at the one selected stage as a visualization, further comprising displaying the line visually indicating the route taken by the one batch where the line is displayed with a predetermined thickness and the thickness of the line at any stage is calculated and displayed in proportion to a physical parameter of the one batch at the selected stage at least one stage prior to it and equal to any property from the group of: quantity of material, weight, volume, density, size distribution.

According to another embodiment of the invention a method is disclosed for tracking a batch of material through at least one stage in a process using a process control system, wherein measurement data of physical parameters is sensed and recorded for each batch of material and wherein each batch of material is moved from a first stage to a second or other stage, the method further comprising on receiving a data input to select one production stage for one batch of a plurality of batches as a request for information about the selected batch, and by displaying information based on the extracted measurement data for the one batch at the one selected stage as a visualization, further comprising displaying the line indicating route taken by the one batch visually indicating the material flow with a predetermined visual indicator according to which type of raw or semi-processed material the material flow contains, the type of material being any from the group of: mineral, a first metal metal ore, a second metal ore, high grade ore, low grade ore, stone, sand, lime, shale, clinkers, mining waste, slag. With a visual indicator of material type the operator in a plant where more than one type of raw material is handled, such as two different metal ores for example, can select batch tacking see at a glance how the raw material of interest has been processed.

According to another preferred embodiment of the invention a method is disclosed for tracking a batch of material through at least one stage in a process using a process control system, wherein measurement data of physical parameters is sensed and recorded for each batch of material and wherein each batch of material is moved from a first stage to a second or other stage, the method further comprising on receiving a data input to select one production stage for one batch of a plurality of batches as a request for information about the selected batch, and by displaying information based on the extracted measurement data for the one batch at the one selected stage as a visualization, further comprising displaying the line visually indicating the route taken by the one batch where the line is displayed with an additional and predetermined visual indicator in proportion to a physical parameter of the one batch which parameter is used as an estimate of a measure of a concentration of a desired or useful substance in the one batch.

According to another, further embodiment of the invention a method is disclosed for tracking a batch of material through at least one stage in a process using a process control system, wherein measurement data of physical parameters is sensed and recorded for each batch of material and wherein each batch of material is moved from a first stage to a second or other stage, the method further comprising on receiving a data input to select one production stage for one batch of a plurality of batches as a request for information about the selected batch, and by displaying information based on the extracted measurement data for the one batch at the one selected stage as a visualization, further comprising displaying a planned or actual production sequence in the first display window and opening a second display window on the workstation and displaying only the information based on the extracted measurement data for the one batch at the selected stage and for at least one stage prior to the selected stage as a visualisation in the second display window on the workstation. By using a separate display window the operator can switch or toggle between a production view and a batch tracking view without losing a sense of the process context.

According to another, further embodiment of the invention a method is disclosed for tracking a batch of material through at least one stage in a process using a process control system, wherein measurement data of physical parameters is sensed and recorded for each batch of material and wherein each batch of material is moved from a first stage to a second or other stage, the method further comprising on receiving a data input to select one production stage for one batch of a plurality of batches as a request for information about the selected batch, and by displaying information based on the extracted measurement data for the one batch at the one selected stage as a visualization, further comprising displaying in the first or the second display window on the workstation a transparent or semi-transparent layer showing one or more optimal material flows for the one batch at the one selected stage and for at least one stage prior to the selected stage as a visualisation on the workstation, wherein the transparent or semi-transparent layer is arranged, on user request, to be superimposable over, or under, the first window or the second display window such that one of either the visualization of the planned or actual production sequence; or the filtered measurement data for the one batch at the one selected stage and for at least one stage prior to the selected stage; and the optimal material flows are visible at the same time.

According to another, further embodiment of the invention a method is disclosed for tracking a batch of material through at least one stage in a process using a process control system, wherein measurement data of physical parameters is sensed and recorded for each batch of material and wherein each batch of material is moved from a first stage to a second or other stage, the method further comprising on receiving a data input to select one production stage for one batch of a plurality of batches as a request for information about the selected batch, and by displaying information based on the extracted measurement data for the one batch at the one selected stage as a visualization, further comprising displaying the schematic visualisation of the extracted measurement data for the selected stage recorded for the production over a time period, wherein the time period is arranged variable according to user input, and displaying the route taken by the one batch at one or more stages prior to the selected stage during the user selected time period.

A primary object of the present invention is to provide a visualization of a process that includes a plurality of process stages and/or process sections. The visualization described here provides a clear and un-cluttered overview of a batch of material at a selected stage in the process, and information and data recorded for that batch from at least one stage prior to the selected stage. The material flow from the at least one prior stage to the selected stage is displayed as a line connecting between two objects on the process display representing two process stages. An operator may monitor a plurality of process sections with one visualization and see only one material flow for each batch of raw or semi-processed material that has been moved, handled or processed or transported between one or more process stages prior to the selected stage. By maintaining an overview over a plurality of process stages or process sections it makes it easier for the operator to have and maintain a sense of overall context in the process.

An advantage of being able to track a batch backwards through a production process is that it enables an operator or a process engineer to identify the origin of a batch found to have a higher concentration of eg metal-bearing ore or a worse batch with a higher concentration of overburden or mining waste. Concentration in this context means any measure or estimate of concentration of the desired or useful substance being produced. Thus in a metal bearing ore it is the concentration of the desired or useful substance, in this example the metal bearing ore, iron ore, copper ore bauxite, alumina etc relative to the amount of stone, earth, rock or other material not containing the substance of interest in the same load. For metal bearing ores electrical conductivity or resistivity measurements may be used to make an estimate of metal ore concentration. For indications of concentration of some other ores physical properties such as density may be measured, or for example measurements involving magnetism may be made. For raw or semi-processed materials where the desired or useful substance is not a metal bearing ore the concentration of desired substance may be concentration of minerals such as coal, silica, crushed stone, aggregate, sand, clay. A concentration of desired or useful substance may be also be a non-mineral substance such as a glass or ceramic, cullet, grain, or a granulated bulk material such as polymer granules, fertilizer pellets, wood or cellulose pellets.

In this way early indication may be gained that a first cutting face has used up all of the ore-bearing material that is estimated to be present and it may be that the cutting face should be driven in a different direction to recover higher concentrations, or else closed. As well, or instead, batch tracking may show that combination with batches from a first cutting face, during a certain time period, with batches from another, second cutting face has reduced the ore-bearing content, so that changes in the process can be made to ensure that a desired ore-bearing content or other concentration or quality parameter is maintained.

According to a second aspect of the invention, a workstation for a process control system is provided in an installation in which a raw or semi-processed material is handled the process control system including at least one computer with computer programs for carrying out at least one of scheduling a planned production sequence using an activity planning system or for recording material flow in an existing production sequence using the process control system, wherein the material flow is moved from a first stage to a second stage using one or more of a plurality of routes, the workstation also comprising an interface for receiving measurement data of one or more physical properties relating to a process being controlled by the process control system, a display unit for displaying physical properties of the process control system to a system operator, and a display control unit configured to retrieve information about a production sequence in the installation from the activity planning system or the process control system, calculate one or more said material flows as a result of the planned or actual production sequence and display on a display of the workstation a schematic visualization of the flow of material in a given time period from a first process stage to at least one second process stage in the installation as a result of the planned or actual production sequence.

An advantage of the workstation described is that if the information is taken from the scheduled activities generated by an activity planning or production scheduling part of the control system, then the displays would show the planned or scheduled material flow from at least one previous stage up to a currently selected stage of a production sequence. By this means an operator monitoring a process, or a process engineer setting up or trouble shooting a process, can identify possible bottle necks, pinch-points in the scheduled process or processes, and be ready to eg request additional vehicles or take alternative action if necessary, or else revise the schedule. In addition, if the information is taken from the material tracking function in the process control system instead, the display would show the actual flow of material for a current production sequence during a defined time interval. That means that it would display the actual recorded material flow, including transportation, during a time interval regardless of the planned schedule. In a development of the invention is also possible to use a time slider to vary the selected time period and by this means to go back or forward to display historical or future planned flow or, a present of historical actual material flow.

In a third aspect of the invention the methods of the invention may be carried out by a computing device comprising one or more microprocessor units or computers. The computing device is arranged with access to data storage or memory means for storing one or more computer programs adapted for carrying out the improved methods for visualisation of material flow in a process control system. Preferably such computer programs contain instructions for the processor to perform the method as mentioned above and described in more detail below. The instructions may be stored on a non-transitory computer readable medium. The instructions may also be stored in volatile computer-readable memory.

### BRIEF DESCRIPTION OF THE DRAWINGS

Embodiments of the invention will now be described, by way of example only, with particular reference to the accompanying drawings in which:
FIGURE 1 shows a schematic representations of a visualization of tracking a batch in a process for producing raw or semi-processed material, the visualization being generated for display in a human machine interface on workstation for monitoring and controlling the process, the example showing schematically a layout of production equipment in a process graphic and showing a material flow between one or more process stages;
FIGURE 2 is a schematic representation another example of the invention of FIGURE 1 and shows of a visualisation batch tracking and in particular tracking different types of material between the process stages according to an embodiment of the invention;
FIGURE 3 shows schematically a process control system for controlling a process such as the process of FIGURE 1, and
FIGURE 4 shows a block schematic of an operator workstation used in connection with the process control system used in the invention of FIGURE 1;
FIGURE 5 shows a flow chart for a computer program for carrying out the method for providing the batch tracking visualization according to FIGURES 1 & 2, and FIGURE 6 shows another flow chart for carrying out the method of FIGURES 1 and 2 according to another embodiment of the invention, FIGURE 7 shows another flow chart for carrying out the method of FIGURES 1 and 10 according to another embodiment of the invention;
FIGURE 8 shows a data carrier on which a computer program adapted for carrying out the method of FIGURE 1 may be stored;
FIGURE 9 is a schematic representation of the invention of FIGURE 1 showing a visualisation of another layout of production equipment and batch tracking between two or more process stages according to an embodiment of the invention and Figure 10 shows the batch tracking visualization together with predetermined optimal material flows optionally superimposed on the visualization batch tracking in the material flows between two or more process stages.

### DESCRIPTION OF THE PREFERRED EMBODIMENTS

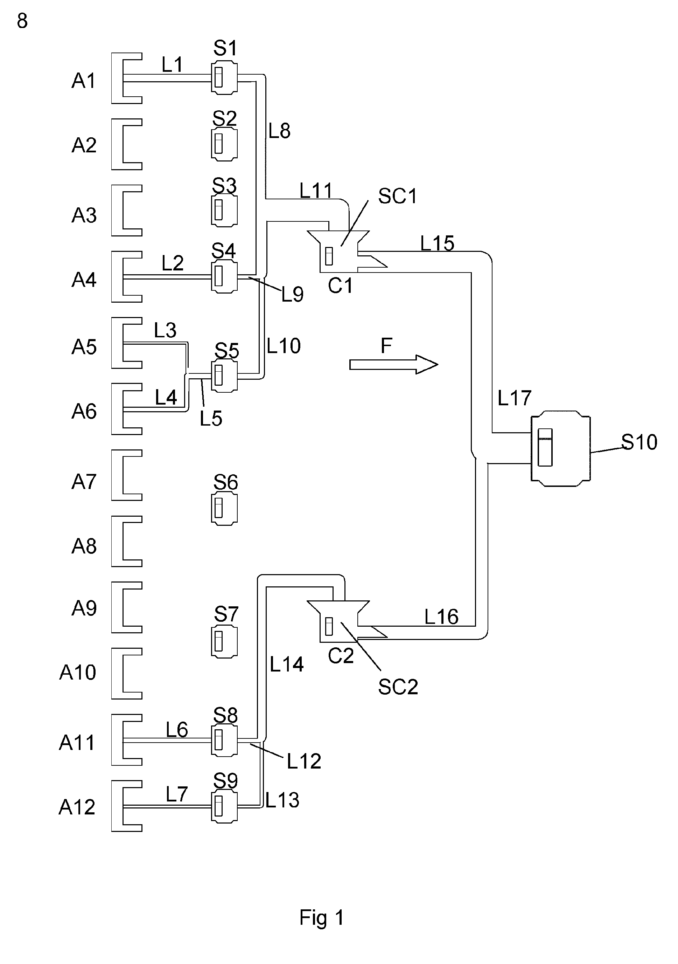

Figure 1 shows an example of a process for production of a raw or semi-finished material and a visualization 8 of the process. In this exemplary example the figure shows a number of production sites A1-A12 in an underground mine. However the invention is not limited to mines and quarries but may be applied to other processes involving the handling of solid raw or semi-processed materials including for example production processes for cement, lime, fly ash, clinkers; potash, phosphate, salt, grain, sand and clay minerals; ceramic and glass materials, silica sand, cullet; bulk polymer granules. In other words, the process is with advantage a mining process, for instance the obtaining of minerals in a mine. However, the invention can also be applied in other industrial processes such as electrical power generation, transmission and distribution processes as well as water purification and distribution processes, oil and gas production and distribution processes, petrochemical, chemical, pharmaceutical and food processes, and pulp and paper production processes. These are just some examples of processes where the system can be applied. There exist countless other processes. The process may be monitored through one or more process monitoring computers, which communicate with a server handling monitoring and control of the process.

Figure 1 shows a number of production points or cutting faces A1-A12, and a number of storages S1-S10. The figure also shows two crushers, C1 and C2. The direction of the process is from the left to right in the diagram as indicated by arrow F. Production points A1-A12 may be a series of mining faces at which a raw material such as iron ore or copper ore, or coal, clay, lime, etc. is cut, drilled, blasted, dug or otherwise excavated at the cutting face. The raw material is then gathered after excavation, typically by a mechanical loader, and loaded into one or more trucks which transport the raw material from the first stage to the next stage. Depending on a particular production sequence, the next stage may be an interim storage shown as S1-S9 which may for example be a hopper, a bunker or an area with a stockpile or heap or mound of raw material. From the cutting face A1-12 or from a storage S1-S9 the raw material may be transported to a crusher C1 or C2. After crushing at C1 or C2 the material may be transported to a storage or may be transported for example to a hoist to move the material to another level in the mine or up to the surface. For another production sequence, the sequence may instead be to transport the raw material from the first stage directly to a later stage, such as the storage S10.

In the example shown in Figure 1 the storage 10 has been selected on the visualization by an operator or a process engineer. The operator or other user has, for example, made a selection on the icon for storage 10 on the visualization on a graphic user interface of a process control system, and then made a command input for a 'trace', that is, for batch tracking. The process control system records all data inputs received during the handling, processing and/or transportation of the batches of raw or semi-processed material in the mine or other installation. The data inputs include measurements recorded by sensors in the process, sensors arranged on loader vehicles, on transporter vehicles, conveyor belts and/or crusher equipment like C1, C2 and on hoists. The amount of material moved by a truck in a single load, which may be registered by a sensor during loading or by a sensor on the truck, is recorded in the process control system. Sensors SC1, SC2 are also arranged at the crushers C1, and C2 to record measures of load or force from which estimates of weight throughput may be derived. One or more sensors may be arranged on the mechanical loader, other handling equipment, conveyors or on the truck to record the weight of a load of raw material loaded into the truck. The material flow and batch data may include data that is manually input to the system or retrieved from a production control application or module.

Upon selection of storage 10 for the purpose of batch tracking, the control system retrieves all data recorded for all batches of raw material that are currently present in the material stored in storage S10. This may proceed in the following way. Upon selection of storage 10 for the purpose of batch tracking, the control system retrieves all data recorded for all operations at the stage immediately prior to the selected stage; then the system retrieves all data recorded for one or more stages immediately prior to the stage immediately prior to the selected stage; then the system iterates this process until no prior stage is identified. When all the data for each stage that was involved in processing the batch up to the selected stage has been retrieved, the system displays a visualization based on that data. The system displays all the stages that the present raw or semi-processed material currently in storage 10 has passed through. This is displayed as a line (L1, L8, L11 etc) drawn between two stages that a batch has passed between.

Thus Figure 1 shows that a large part of the material in the selected stage, storage 10, came from crusher C1. The material in that crusher came from storages S1, S4 and S5. The amount of material from S5, as indicated by the thickness of line L10 joining S5 to the flow to crusher C1 is a lesser amount. The amount of material from storage S1, shown by line L8, was a greater amount, approximately two times the amount, when comparing the line thickness of L8 with L10 the amount from S5. Further examination of the material flows shows also that the material in storages S1, S5 and S5 was originally excavated at either A1 or A4-A6.

Similarly a lesser amount of material in the selected stage, storage 10, came from another crusher C2. The material processed in crusher C2 came from storages S8 and S9, and was originally excavated either at cutting face A11 or A12. The width of the lines L6, L7, L12, L13 and L14 gives an immediate visual indication to the operator or process engineer of the relative amount of raw or semi-processed material between each stage. In the example described above, a material flow from A1 is visualized by a line drawn between A1 and C1. The material may be stored temporarily at a storage such as S1. To simplify the visualization, and reduce visual clutter, the other possible routes for material flow between A2 and A3 and C1, for example, are not shown marked in any way as there was no flow of raw material, there are no batches from A2 or A3, or from storages S2, S3 that have been processed and/or transported to storage S10 during the time period of interest.

The line between any two stages may be displayed as a plain solid black or coloured line on a display. Optionally, and in particular when a more complex flow is visualized, a line representing a particular material flow may be drawn using a dashed or dotted line or a semi-transparent line, for example to show a calculated optimal flow. The thickness of the line may be varied to show the relative amount, for example the quantity of the material measured by weight that flows between the various stages. It should be noted that the drawings in Figures 1-4 and Figures 9-10 are intended to be representative only, and are not drawn to scale. The measures are not limited to weight but may be any measured parameter such as volume, weight, or an estimated measure such as density, volume and/or weight. In addition any physical parameter that is recorded by the process control system may be selected or configured as a measure of the process. Typically weight is used, but any physical property of the material flow between any process stages may be selected for measurement and display, for example any property from the group of: quantity of material, size distribution, concentration, resistivity/conductivity.

It is also possible to use a time slider to go back or forward to display a historical production record, to show batches in a current production, or a future planned flow. That is, the display application is arranged with control functions which make it possible to vary the time period for the display using, for example using a graphic interface control such as a time slider or time line control. The visualization of planned activities from the activity planning system is preferably arranged such that the workstation display may be simply switched from showing the planned activity view, to a visualization that includes real time tracking by a selecting a tab, selecting another view or by another control action.

When the information is taken from the material tracking function in the process control system the visualization displays the actual flow of material to the selected stage (eg S10) during a defined time interval. That means that it displays the recorded transportation or processing during a time interval regardless of calculated amounts etc in any planned schedule. Measurements of weight, for example, such as from sensors at the A1, A2 cutting face or on board transport trucks and so on, or sensors arranged at the interim storage points S1, S2; or sensors SH1 arranged in or adjacent the hoist H1 track the amount of material at those points or stages. A sensor registering a parameter other than weight of material anywhere between a selected stage (S10, S27) and at least one prior stage (Al-12, An-1 to An-6; C1, C2, C5) may be used as well as or instead of a sensor for weight. Preferably, the planned activity view previously described may also be switchable so that it may be superimposed as a semi-transparent layer over the actual flow of material, for comparison and control purposes during an actual production sequence.

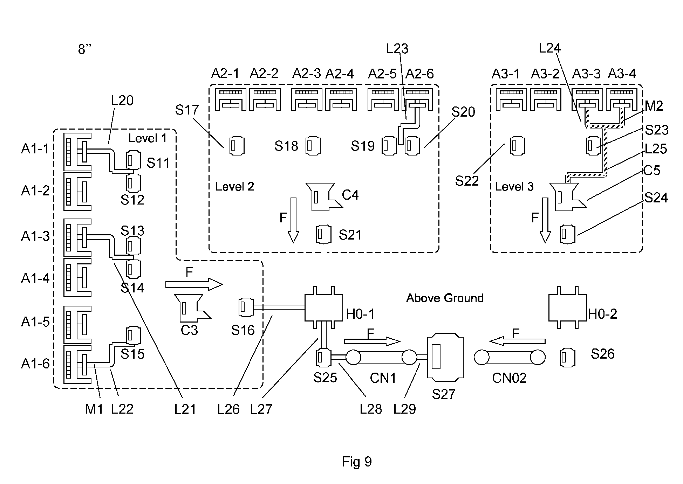

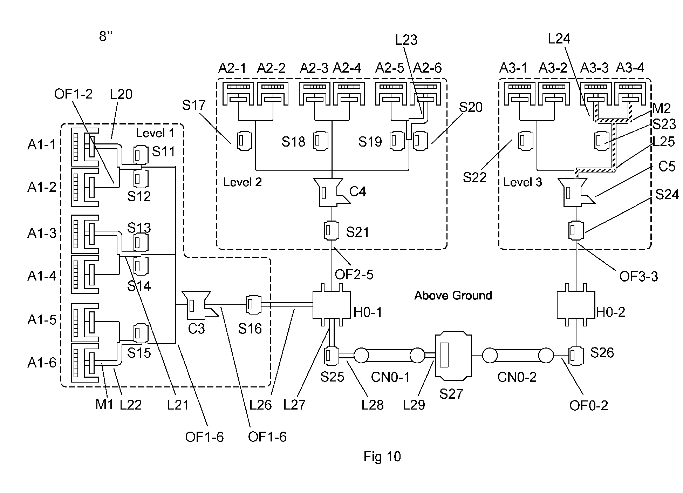

The benefits of this visualization include that an operator may be trained and learn how to work as an operator with this underground mine example more quickly, with help of the visualization of the process thus provided. The material flow, between the selected stage S10 (or C1, C2, C5, S27) and at least one prior stage (Al-12, An-1 to An-6; C1, C2, C5) is calculated and displayed on the visualization on a workstation when a process stage has been selected for batch tracking. The actual route taken by the material making up the preselected batch at the selected stage is shown. Other possible routes in the mine are not normally marked on the visualization, that is, of course, not until a time period is selected during which those routes are, or have been in use, for a planned (scheduled) activity or for a real time production activity. Other possible routes are also described below in relation to Figs 9 and 10.

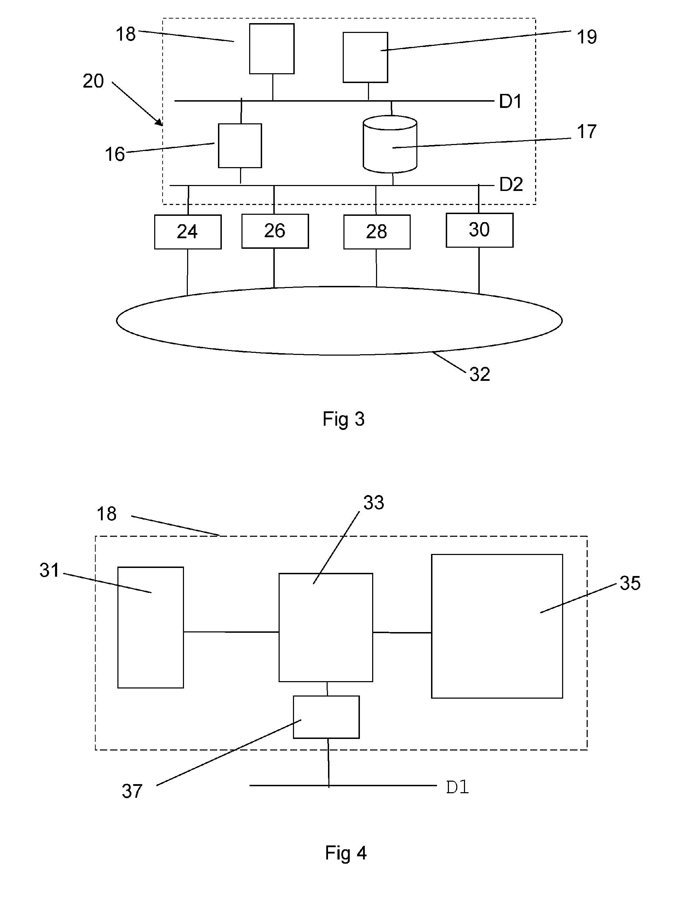

Figure 3 schematically shows a control system 20 for a process 32, i.e. a process control system. The process 32 may be process in a mine or a quarry and may furthermore be any of a number of different types of processes handling a raw material or a semi-processed raw material such as a first metal ore, a second metal ore, high grade ore, low grade ore, non-metallic minerals, stone, sand, limestone, lime, cement, slag, gangue, mining waste and so on. The visualization may optionally be used to visualize a material such as mining waste or other low value material that may be removed from a cutting face or a crusher, stored and at some stage transported for burial or backfill at a disused cutting face or other suitable place.

The control system 20 may for instance be an object-based computerised system for controlling the process 32, a system such as the 800xA system supplied by ABB. An activity planning system may be implemented as an add-on module or application that can access the history database 17 of the process control system. Preferably such an activity planning system can also access sensor data or other data direct from the control system or via process interface units (24-30). The process control system includes a material tracking function as an add-on module or as an integrated application, or a plug-in or as part of the control system. In Fig. 3 the process control system 20 includes a number of operator workstations or terminals 18 and 19 connected to a first data bus D1. There is furthermore a second data bus D2 between the first and second busses that is connected to a server 16 providing control and monitoring of the process 32. Second data bus D2 is also connected to a database 17 where data, such as historical data relating to control and monitoring of the process 32, including production data each batch of raw material produced or processed at each stage, is stored. To the second data bus D2 there are furthermore connected process interface units 24, 26, 28 and 30 for providing control of the process and for receiving measurement data from the process 32. In the figure there are provided four such process interface units 24, 26, 28, 30 that interface the process 32.

It should however be realized that there may be more or fewer of each of these interface units. It should here also be realized that some of these may only be provided for control, some only for measurements and some for both control and measurements. It should be realized that one or more of sensor units placed at storages S1-10, sensors SC1, SC2 arranged at the crushers C1, C2 and one or more sensors arranged at the hoist may be connected to such process interface units. Such units are thus all involved in controlling the process 32 and in doing this also involved in measuring physical properties related to the process. The measured properties may here be properties of the process itself such as a weight of a load of metal-bearing ore, or a weight of another raw material in a storage such as S1 or S2. The measured properties may be other data relevant for monitoring and control of the process of operating parameters such as motor temperature, motor speed, motor voltage and/or current from process equipment such as a crusher, a conveyor belt, a hoist, and parameters such as payload weight or geographical position from a vehicle, which is typically transmitted wirelessly from a truck to a control system wireless receiver or a wireless access point (not shown in figures). The process interface units 24, 26, 28, 30 may also provide information on properties or status of vehicles in the process.

It is advantageous that the visualisation provides an interface in the process control system which functions in a very simple and intuitive way. This enables an operator to evaluate the information in more quickly and in a less-fatiguing way. First the material flow is visualized as a line connecting two or more stages. A physical material parameters such as weight or volume or density etc is schematically indicated by the relative thickness of the lines. Secondly, simply by selecting and activating an equipment icon a link to information held by the process control system is activated. Thus by means of the process control system and, for example interface units 24, 26, 28, 30 selecting or activating a control object on the visualization such as one of the a cutting faces A1-A12 or a Storage S1-S10, a crusher C1 or C2 or the hoist H1, measured physical parameters and stored historical data may be accessed, retrieved and displayed to the operator or process engineer. The control object may be visualized as a truck icon, cutting face icon, an icon for a storage hopper and so on. This information about the process, such as production sequence records, a motor speed of a crusher, a motor speed of a loading vehicle, motor speed of a truck and so on is used by the operator for monitoring and control purposes or a process engineer for engineering, calibration, configuration and so on.

Figure 4 shows an operator workstation 18 in a process control system 20 that includes a user input unit 31, a display unit 35, a display control unit 33 and an interface 37 for communicating with the other parts of the process control system 20 via the first data bus D1. An operator workstation 18 or 19 provides a graphical user interface for an operator of the system, with which process graphics, such as the present visualization, and other human machine interface screens for monitoring or controlling a process may be displayed. The control unit 33 may comprise a processor with an associated program memory including program code for performing the functionality of the present invention. The display unit 35 may be any suitable display unit, such as a liquid crystal display, plasma display, LED or OLED (organic light emitting diode) or CRT device. The user input unit 31 is a unit through which a user of the operator workstation 18, i.e. an operator, may enter data. As such it may be a keyboard, a keypad or a mouse or other data input device. The user input unit 31 may also be combined with the display unit in order to together form a touch screen. The touch screen may be arranged as a multi-touch apparatus with a resistive or capacitive-type touch and display surface.

The methods of the invention may also be carried out using a server application on the process control system side, such as a web server, together with a thin client such as a web browser software running on the workstation side. One such implementation is described in a patent US8,126,964 entitled Method for Displaying Data in an Industrial Control System, and assigned to ABB Research Ltd. A thin client is a program run by the computer of the workstation, which is not required to be resource intensive since most of the computing calculation work is done on another, normally remote computer, a server machine. This may be a server machine such as data server 16 in Figure 3. Using a client-server implementation has advantages in particular when it comes to providing the visualization in a graphical user interface on a remote workstation or portable computer, notebook, PDA, smart phone or other portable computing device. The methods may also be implemented in a similar way using applications of the process control system running in a cloud and providing computing power to thin client or web browser applications running on a fixed or portable workstation.

The operator workstation or terminal 18 may also include other user interfaces such as a camera for recognizing gesture commands, a speaker or a microphone for registering spoken commands in order to present and receive data to and from one or more users of the operator terminal in other ways than through the display unit. The unit may for example be arranged with sensors and software suitable for receiving gesture-based commands, as well or instead of commands by means of touching or sweeping fingers on a touch screen or instructions input via a computer mouse and so on.

Data from the various process interfaces such as 24, 26, 28, 30 can be collected and stored in a history data base 17 as well as presented in real-time to an operator via the display unit 35. The production history and sensor measurement of physical parameters, recorded during processing of each of the batches is stored in the databases connected to the process control system. The operator workstation 18 in the process control system 20 may present data regarding the process in a number of different ways. Primarily process information is presented in a series of process graphics, as described previously. It may present the process through a number of interconnected process control units, which process control units may include process interface units. However they may also include other units where the process is carried out but no measurements are being made or no control is carried out. Along with these units the operator terminal may furthermore display data relating to the process as well as to the process control units, such data may be measurement data of a physical property of the process and/or of process interface units. The data may also include data of a physical property that has been derived from a measured physical property. The data may furthermore include status data of various units in the system. The measurements are here typically measurements obtained at discrete and equidistant consecutive points in time, i.e. as data samples of the process in a real time production process.

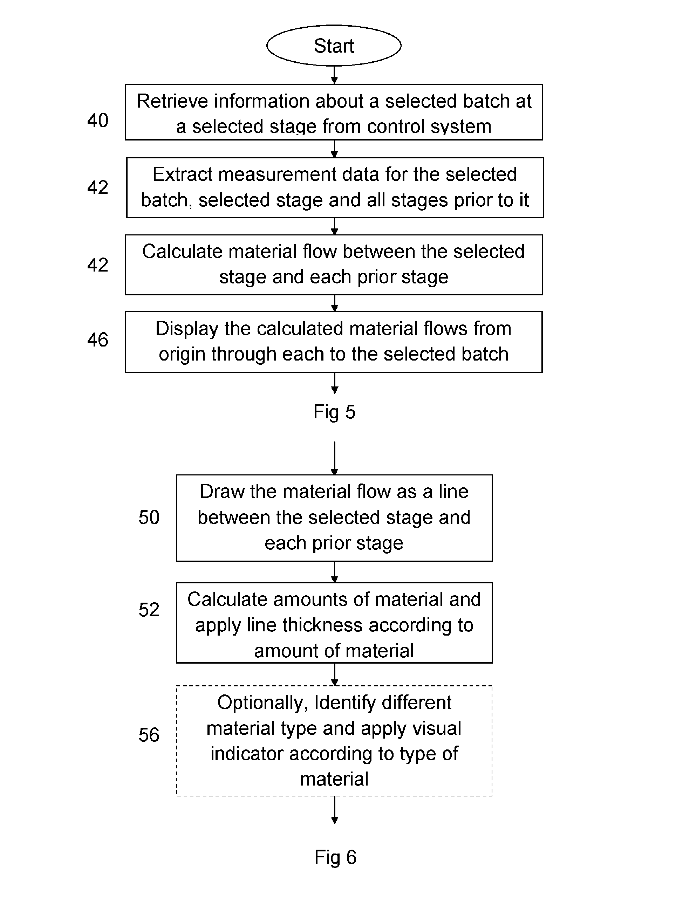

Figures 5, 6 and 7 show flow charts of one or more methods for carrying out the method of the invention. Figure 5 shows a flowchart for a computer program that is adapted for carrying out method steps including:
40 Retrieve information about a selected batch at a selected stage from control system;
42 Extract measurement data for the selected batch at the selected stage and all stages prior to it;
44 Calculate material flow between the selected stage and each prior stage;
46 Display the calculated material flows from origin through each stage to the selected batch.

Thus the batch data for batches making up the material flows leading to the stage and batch currently selected for batch tracking is retrieved. Material flows are calculated between each of the stages back from storage S10 to cutting faces A1, A4 etc. The data is retrieved from an actual production sequence (real time or data from historical production records). The material flows are then displayed as a line connecting two or more stages, for example a flow of material M1 as A1-S1, S1-C1, C1-S10 (Fig 1) in the visualization 8 displayed by the display unit 35 on the workstation 18.

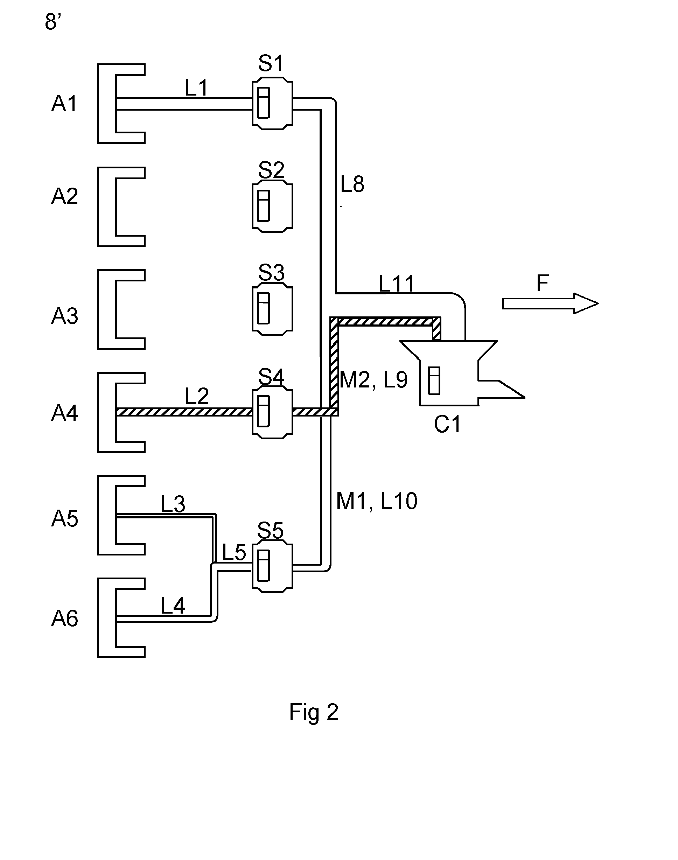

Figure 2 shows a preferred embodiment. It shows a visualization 8' of similar production sequence as in Figure 1 for a selected batch at crusher C1. The direction of the process is also from the left to right in the diagram as indicated by arrow F. One material flow from storage S4 to crusher C1, and from cutting face A4 to storage S4, has been identified, by means of data from the process control system, to be a material M2, which is a different material from the material flows M1. This difference may be a difference of type of material, a different metal ore, for example. The difference may that M2 has been partly processed, for example graded in size, and has a different size distribution from the other material M1. The difference may be that a different type of material, for example when a zinc ore and a copper ore are separately mined in the same mine. The line representing the flow of material M2 between any two stages, A4-S4, S4-C1 is shown with a predetermined visual indicator. In this case the visualization shows in a very efficient way to the operator which types of materials are being transported, and in which relative or absolute amounts, and from which stage or stages in the process the batches have passed through (out of all of the possible routes available in the process).

Figure 6 is a flow chart for a computer program that is adapted for carrying out method steps including:
50 Draw the material flow as a line between the selected stage and each prior stage
52 Calculate an amount of material at each stage and apply line thickness dependent on the amount
56 Optionally, identify different material type and apply a visual indicator according to type of material

Step 52 may optionally be performed before step 50 so that the thickness is calculated first and then the line is drawn with the thickness thus calculated. Thus at step 56 different material or different ore type material flows in the process A4-S4, S4-C1 may be shown by applying a filter to the planned production sequence or actual production sequence. Thus in an actual production sequence, real-time measurement data of one or more physical properties relating to a process, or stored historical such measurement data, may be filtered to obtain only the measurement data for a predetermined type of material. Examples of different types of raw or semi-processed material the material flow contains may include any from the group of: mineral, metal ore, ore of a first metal, ore of a second metal, high grade ore, low grade ore, stone, sand limestone, mining waste, slag. The material flow of one or more of the different material types may be displayed on the visualization 8' with a visual indicator such as M2.

Figure 9 shows a visualisation 8" according to a preferred embodiment. The figure shows an installation with production areas arranged in multiple levels. Levels 1-3 are each marked as surrounded by a dotted line. In Level 1 the figure shows six cutting faces or production faces A1-1, A1-2 and so on to A1-6, which may be written as An1 to An-6. The figure shows that Level 1 has five storage areas or stages S11 to S15 between the production faces Anl-6 and a crusher C3. After crusher C3 there is a sixth storage S16 between the crusher and the nearest hoist H0-1. In Level 1 three actual or historic material flows are shown visualized, L20, L21 and L22. There is a fourth material flow from the Level 1 area between storage S16 to the nearest hoist H0-1. The nearest hoist H0-1 for output from Level 1 has to be shared with output etc from Level 2.

Level 2 and level 3 are similarly visualized. The direction of the process is from the upper to lower in the diagram as indicated by vertical arrow F. Level 2 also has six production faces, A2-1 to A2-6. There are four storages S17 to S20 near to the production faces, and one storage S21 between a crusher C4 and the nearest hoist H01, located outside Level 2. Only one planned or actual material flow, L23, is visualized in Level 2. The material flow L23 has a visual indicator showing that it is material type M2, as described previously in relation to Figure 2. Similarly Level 3 shows four production faces A3-1 to A3-4 with two storages S22, S23 which are close to the production faces. A third stage S24 is positioned between a crusher C5 and the nearest hoist which, in this case, is H0-2 connected to the Above ground level. The nearest hoist H0-2 for output from Level 3 has to be shared with output etc from Level 2, however output from Level 2 may equally well be shared with output from Level 1 on hoist H0-1.

The fourth level is called 'Above ground'. The direction of the process is from the left to right in the diagram as indicated by arrow F. This level may be above ground and the other three levels at different depths below ground. In principle all of the levels could as well represent different levels above or below ground in an installation. The figure shows that the Above ground level includes the two hoists H0-1, and H0-2 previously described, as well as two conveyors CN1, CN2. There is also a major storage area S27 above ground. A minor storage S25 is positioned between hoist H0-1 and the major storage S27. A conveyor CN1 is positioned to move material between storage SS25 after the hoist H0-1 and to the major storage S27. Four actual or historical material flows, L26-L29, are visualized in Fig 9. Thus when major storage S27 is selected for batch tracking only the lines L29-L26 would be displayed leading back from S27 via conveyor CN1 to storage S25. The visualization shows that the batch of raw material in storage S25 came from the hoist H0-1, and had been transported there from storage S16 in Level 1. Thus actual material flows in an installation, current or historical, are visualized so the origin, processing and transportation of each batch in the material flow may be monitored and controlled by an operator using the visualization.

Figure 10 shows the same visualization as Fig 9, with the sole exception that a selection from all possible optimized material flows (OF1-1 ... OF3-3) for material flow between each stage in a production area are visualized as well as any actual (or historical) material flows of interest. For example Level 1 shows in addition to three actual or historical material flows L20-L22, an optimized material flow OF1-2 between production face A1-2 and storages S11, S12 as a thin line. A number of optimized material flows OFS1-6 are indicated for flow between each of the storages S11 to S15 and storage S16. Not all the optimized material flows in Fig 10 have been given reference numbers, in the interests of not cluttering up the drawing and making it difficult to read. Also in Level 1 another optimized flow OF1-6 is shown between the crusher C3 and the storage S16, which is the storage nearest the exit from Level 1. Similarly, in Level 3, an optimized material flow OF3-3 is shown leading between crusher C5 of Level 3, storage S24, and the nearest hoist H0-2.

Thus if a batch at the crusher C5 in Level 3 is selected for batch tracking then the only the material flows represented by lines L25, L24 would be visualised in the diagram. Material flows L20-L23 would not be displayed. As shown in figure 10 the optimal flows would be displayed, so that an operator or a process engineer could compare the processing from crusher C5 back through storage S23, back to cutting faces A3-3 ad A3-4, with the optimal flows as originally designed for this level.

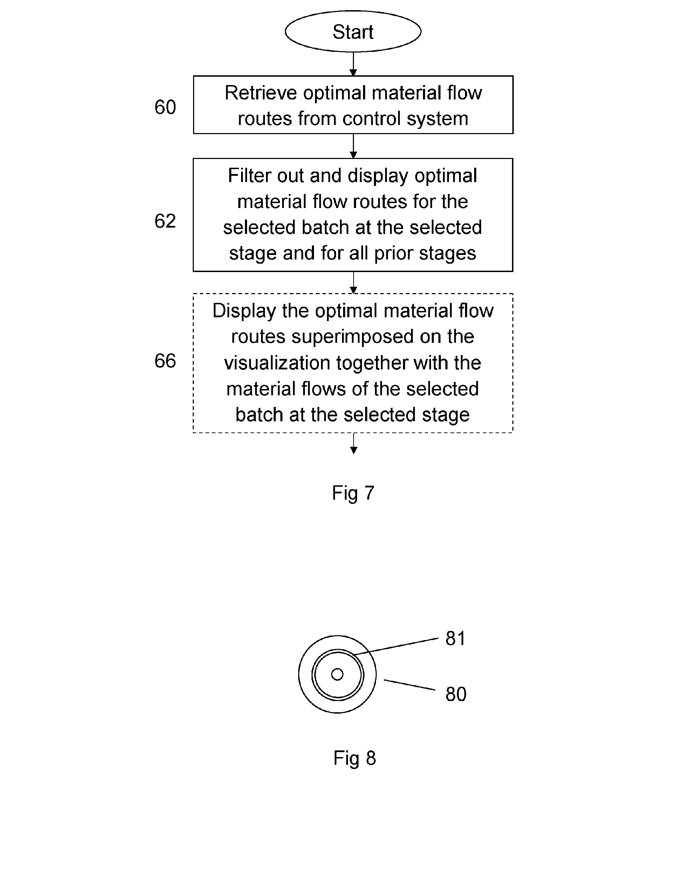

Figure 7 is a flow chart for a computer program that is adapted for carrying out method steps in respect of Figure 10, the steps including:
60 Retrieve optimal material flow routes from activity planning system or control system
62 Filter out and display optimal material flow routes for the selected batch at the selected stage and for all prior stages
66 Display the optimal material flow routes superimposed on the visualization together with the material flows of the selected batch at the selected stage.

Thus at step 62, the actual or historical material flows currently of interest from the selected stage and backwards through all prior stages are identified. The measurement information data is filtered to show just those material flows, eg such as L24, L25 and so on in Figure 9. These material flows are essentially equivalent to the material flows shown in Figures 1 & 2. Then in step 66 the optimized material flow routes relevant for the selected batch at the selected stage eg at crusher C5 are displayed. Preferably the optimal routes are displayed superimposed on the material flows between stages up to the selected stage such that both sets of flows are visible at the same time. It should be remembered that the superimposed optimal flows are normally only visible on demand or request by an operator or a process engineer.

### xxx

The optimized material flows of Fig 10, such as OF1-2, OF1-6 may be shown on a visualization 8" on receipt of a command by the operator. The optimized routes OF1-2, OF1-6, etc are calculated and created when the installation is designed and engineered, as also described in the flow chart of Figure 7. The optimized routes are also re-calculated or amended when the layouts or equipment in the mine or other installation are upgraded or otherwise changed. Thus the operator can compare an actual or historical material flow with the optimal material flows as originally designed to make the most efficient use in respect of eg equipment capacities, storage capacities, transport capacities and distances. Certain storages eg S11, S12 are nearest to specific cutting faces A1-1, A1-2 and it is then optimal to transport material from A1-1 to S1-1 when an interim or temporary storage is required to optimize production at a particular production face or cutting face. The visualization - shown on demand- showing the optimal material flows provides the separate optimal material flows for comparison with a current actual, or historical actual material flow intuitively and clearly. This is of benefit for the purposes of training operators, and for planning production, and for adjusting or improving a material flow in an actual production sequence. It is also of benefit in reducing strain and fatigue for operators as the interpretation of simplified schematics is less fatiguing than reading and interpreting text names and explanations.

This generating or "switching on" of visualization 8 " may be implemented using a menu control item, or by for example selecting a graphic control object such as a tab on the present visualization. Preferably visualization 8" is displayed by opening a second display window on the workstation, preferably as a transparent or semi-transparent window. The second window is used to display the visualisation 8" with either: all optimal material flows; or a selected one or more optimal material flows.

For example, when C5 in level 3 is selected for batch tracking, and with optimal flow, then the relevant optimal flows between A3-1, A3-2 and C5, and A3-3, A3-4 and C5, are the only optimal flows shown on the visualization 8" . Likewise, if storage S27 were selected for batch tracking then only the optimal flows OF1-1 to OF1-6, and optimal flows between S16 and S27 would be displayed when the material was produced at one or more of cutting faces A1-1 to A1-6 of level

Thus if for example a quality parameter of material in storage S27 was found to be outside a limit it might be because material from one production stage or cutting face which should have been transported according to an optimal flow. However in this hypothetical example, the material has been moved to another storage and in this way the wrong material has been added to storage S27. The optimal flow visualisation provides the operator with a very quick and simple way to compare the tracked batch of material with an optimal flow and find out straight away if the batch has been processed according to the original optimal flows designed for the production area Level 1 or Level 2 etc.

Thus a visualisation of optimal material flow routes, in which the material flows may be generated as a series of eg thin lines in a neutral colour or suitable contrast colour when compared with the material flow lines M1, M2 of Figs 1, 2, and OF3-3 etc of Figs 9, 10. Optionally, the optimal material flows may be displayed as eg dotted lines, lines with a blinking or an animated effect and so on in contrast to the substantially thick lines of the typical planned or actual material flows such as those indicated as M1 or M2. The combined view shown in Fig 10 of both material flows and optimal flows may be a default option. If required, a view showing all optimal material flows and only one planned or actual material flow; or even no material flows; may also be generated as a visualization on request.

A common situation may be that temporary circumstances make the use of non-optimal storages necessary during a certain production sequence, something that an operator should be aware of. Another situation is that an equipment problem or capacity problem may have arisen that requires a repair or a equipment upgrade, and the operator or process engineer may then be informed about that by means of being always able to compare a current planed or actual material flow to the optimal flow. For each such situation the visualization makes the tasks of the operator less fatiguing. It is simpler to understand the visual, graphic images than to reading the traditional text names of objects together with explanatory lines of text of traditional control systems.

Typically the workstation may be arranged as a computer or terminal at a fixed point at a station in the process or in a control room. Alternatively, or as well, one or more workstations may be arranged as portable computing devices communicating with the process control system, such as with data bus D1 for example, over a wireless radio link or WLAN (not shown in the figures). In a preferred embodiment the visualizations 8, 8', 8" and the graphic interface control functions of the visualizations may be optimized for display and use on small portable wireless devices such as PDAs, mobile phones, smart phones and the like. For example, the control functions for the visualization may be optimized for use on a small touch screen as a series of commands entered by touching, pinching or sweeping with fingers and/or with data input or selection and/or command inputs using a pointer or stylus.

Optionally a more complex situation may be visualized. When it is required for training purposes, planning purposes, or for control purposes to visualize the process where a plurality of material types may be involved then different material flows may be calculated and then a plurality of material flows displayed at the same time in the same visualization using a different visual indicator for each different material. Finally, as described in connection with Figures 9 and 10, lines may also be displayed to show one or more optimal material flow routes for comparison with currently, actual, or historical actual batches preceding a selected batch and stage.

The methods of the invention may, as described herein, be carried out by means of one or more computer programs comprising computer program code or software portions running on a computer or a processor. The microprocessor (or processors) comprises a central processing unit CPU performing the steps of the method according to one or more methods of the invention. The invention is performed with the aid of one or more said computer programs, adapted for carrying out the method of the invention such as the methods flowcharted in Figures 5-7, which are stored at least in part in memory and as such accessible by the one or more processors. The or each processor may be in a memory storage unit of a process system control unit or a PLC (Programmable Logic Controller) or other system part thereof, in a local or distributed computerised control system. It is to be understood that said computer programs may also be run on one or more general purpose industrial microprocessors or computers instead of one or more specially adapted computers or processors.

The computer program comprises computer program code elements or software code portions that make the computer perform the method using equations, algorithms, data, stored values and calculations previously described. A part of the program may be stored in a processor as above, but also in a ROM, RAM, PROM, EPROM or EEPROM chip or similar memory means. The program in part or in whole may also be stored on, or in, other suitable computer readable medium such as a magnetic disk, or a non-transitory computer readable medium such as a CD (compact disc) or a DVD (digital versatile disc), stored on a hard disk, magneto-optical memory storage means, in volatile memory, in flash memory, as firmware, stored on a data server or on one or more arrays of data servers. One such data carrier 80 in the form of a CD ROM disk with a computer program 81 carrying such computer program code is schematically shown in Fig. 8.

The person skilled in the art realizes that the present invention is by no means limited to the examples described above. On the contrary, many modifications and variations are possible within the scope of the appended claims.

## Claims

1. A method for tracking a batch of material through at least one stage in a process (32) in an installation for production of raw or semi-processed material using a process control system (20), wherein measurement data of physical parameters is sensed and recorded for each batch of material during each stage of the production, wherein each batch of material is moved from a first stage (Al-12, An-1-An-6) to a second or other stage (S1-S9, S11-S24; C1, C2, C5, CN01-2; H01-2), characterised on receiving as a data input to a workstation of the process control system (20) a selection of one stage (S10, S27) for one batch of a plurality of batches as a request for information about the selected batch, by filtering the measurement data to extract measurement data for the one batch at the one selected stage and for at least one stage (C1, C2, C5; S1-S9, S11-S24; A1-A12, An-1-An-6) prior to the selected stage (S10, S27), and by displaying information based on the extracted measurement data for the one batch at the one selected stage as a visualisation (8, 8') on a graphic user interface in a first display window of the workstation (18, 19) of the process control system.

2. A method according to claim 1, **characterised by** displaying a route taken by the one batch at the selected stage visually indicated by means of a line (L1-L29) joining the at least one prior stage to the selected stage (S10, S27).

3. A method according to claim 2, **characterised by** displaying the line visually indicating the route taken by the one batch where the line is displayed with a predetermined thickness (L1-L29) and the thickness of the line at any stage is calculated and displayed in proportion to a physical parameter of the one batch at the selected stage at least one stage prior to it and equal to any property from the group of: quantity of material, weight, volume, density, size distribution.

4. A method according to claim 2 or 3, **characterised by** displaying the line indicating route taken by the one batch visually indicating the material flow with a predetermined visual indicator according to which type (M1, M2) of raw or semi-processed material the material flow contains, the type of material being any from the group of: mineral, a first metal metal ore, a second metal ore, high grade ore, low grade ore, stone, sand, lime, shale, clinkers, mining waste, slag.

5. A method according to any one of claims 1-4, **characterised by** displaying the line visually indicating the route taken by the one batch where the line is displayed with an additional and predetermined visual indicator in proportion to a physical parameter of the one batch which parameter is used as an estimate of a measure of a concentration of a desired or useful substance in the one batch.

6. A method according to claim 1, **characterised by** displaying a planned or actual production sequence in the first display window and opening a second display window on the workstation and displaying only the information based on the extracted measurement data for the one batch at the selected stage and for at least one stage (C1, C2, C5; S1-S9; A1-A12, An-1-An-6) prior to the selected stage (S10, S27) as a visualisation (8, 8') in the second display window on the workstation (18, 19).

7. A method according to claim 6, **characterised by** displaying in the first or the second display window on the workstation a transparent or semi-transparent layer showing (66) one or more optimal material flows (OF1-2, OF1-6, OF2-5, OF3-3, OFO-2) for the one batch at the one selected stage and for at least one stage (C1, C2; S1-S9, S11-S24; A1-A12) prior to the selected stage (S10, S27) as a visualisation (8, 8', 8") on the workstation (18, 19), wherein the transparent or semi-transparent layer is arranged, on user request, to be superimposable over, or under, the first window or the second display window such that one of either the visualization of the planned or actual production sequence; or the filtered measurement data for the one batch at the one selected stage and for at least one stage (C1, C2, C5; S1-S9, S11-S24; A1-A12) prior to the selected stage (S10, S27); and the optimal material flows (OF1-2, OF1-6, OF2-5, OF3-3, OFO-2) are visible at the same time.

8. A method according to any previous claim, **characterised by** displaying the schematic visualisation (8, 8') of the extracted measurement data for the selected stage recorded for the production over a time period, wherein the time period is arranged variable according to user input, and displaying the route taken by the one batch at one or more stages prior to the selected stage during the user selected time period.

9. A computer program product on encoded on a non-transitory computer readable medium comprising computer program code configured to, when said program code is loaded into a workstation provided in a process control system, carry out the steps of a method according to any one of claims 1-8.

10. A workstation (18, 19) of a process control system (20) for a production process (32) in an installation in which a raw or semi-processed material is produced, the process control system (20) including at least one computer with computer programs adapted for recording material flow in an existing production sequence using the process control system, wherein each batch of material is moved from a first stage (Al-12, An-1-An-6) to a second or other stage (S1-S9, S11-S24; C1, C2, C5, CN01-2; H01-2), **characterised in that** the workstation comprises an interface (37) for receiving measurement data of one or more physical parameters sensed and recorded for each batch of material during each stage of the process (32) being controlled by the process control system (20), a display unit (35) for displaying physical properties of the process control system to a system operator, and a display control unit (33) configured to: retrieve, on selection of one stage (S10, S27) for one batch of a plurality of batches as a request for information about the selected batch, filtered measurement data for the one batch at the one selected stage and for at least one stage (C1, C2, C5; S1-S9, S11-S24; A1-A12, An-1-An-6) prior to the selected stage (S10, S27), and to display on a display of the workstation a schematic visualization (8, 8') based on the extracted measurement data for the one batch at the one selected stage on a graphic user interface in a first display window of the workstation (18, 19) of the process control system.

11. A workstation according to claim 10, **characterised in that** the workstation is configured to display a route taken by the one batch at the selected stage visually indicated by means of a line (L1-L29) joining the at least one prior stage to the selected stage (S10, S27) indicated visually in a visualization (8, 8') included in a process graphic or process flow diagram.

12. A workstation according to claim 11, **characterised in that** the workstation is configured to display the route taken by the the one batch at the selected stage where the line is displayed with a predetermined thickness (L1-L29) and the thickness of the line at any stage is calculated and displayed in proportion to a physical parameter of the one batch at the selected stage and at least one stage prior to it and equal to any property from the group of: quantity of material, weight, volume, density, size distribution.

13. A workstation according to claim 11 or 12, **characterised in that** the workstation is configured to display the line indicating route taken by the one batch at the selected stage visually indicating the material flow with a predetermined visual indicator according to which type (M1, M2) of raw or semi-processed material the material flow contains, the type of material being any from the group of: mineral, a first metal ore, a second metal ore, high grade ore, low grade ore, stone, sand, lime, shale, clinkers, mining waste, slag.

14. A workstation according to any one of claims 10-13, **characterised in that** the workstation is configured to display the line visually indicating the route taken by the one batch at the selected stage where the line is displayed with an additional and predetermined visual indicator in proportion to a physical parameter of the one batch at the selected stage, which parameter is used as an estimate of a measure of a concentration of a desired or useful substance in the one batch.

15. A workstation according to claim 10, **characterised in that** the workstation is configured to open a second display window on the workstation and display only the information based on the extracted measurement data for the batch at the one selected stage and for at least one stage (C1, C2, C5; S1-S9; A1-A12) prior to the selected stage (S10) as a visualisation (8, 8') of measurement data additionally filtered to extract a selected type of raw or semi processed material on the workstation (18, 19) for display in the second display window.

16. A workstation according to claim 15, **characterised in that** the workstation is configured to open the second display window on the workstation as a transparent or semi-transparent window and display (66) one or more optimal material flows (OF1-2, OF1-6, OF2-5, OF3-3, OFO-2) for the one batch at the one selected stage and for at least one stage (C1, C2, C5; S1-S9, S11-S24; A1-A12, An-1-An-6) prior to the selected stage (S10, S27) as a visualisation (8, 8', 8") on the workstation (18, 19), wherein the second display window is arranged, on request, to be superimposable over, or under, the first window such that both the visualization of the filtered measurement data for the one batch at the one selected stage and for at least one stage (C1, C2, C5; S1-S9, S11-S24; A1-A12) prior to the selected stage (S10, S27), and the optimal material flows (OF1-2, OF1-6, OF2-5, OF3-3, OFO-2) are visible at the same time.

17. A workstation according to any one of claims 10-16, **characterised in that** the workstation is configured to display the schematic visualization the route taken by the one batch at the selected stage over a time period, wherein the time period is arranged variable according to user input, and to display the route taken by the one batch at one or more stages during the user selected time period.
